# EUROPÄISCHE PATENTSCHRIFT

(11) **EP 3 501 154 B1**
(45) Veröffentlichungstag und Bekanntmachung des Hinweises auf die Patenterteilung: **11.08.2021**
(21) Anmeldenummer: 17768419.8
(22) Anmeldetag: 12.09.2017
(51) Int. Cl.: H04L 29/06, H04L 9/32

(54) **BEREITSTELLEN EINER GESICHERTEN KOMMUNIKATION INNERHALB EINES ECHTZEITFÄHIGEN KOMMUNIKATIONSNETZWERKES**
PROVISION OF SECURE COMMUNICATION IN A COMMUNICATIONS NETWORK CAPABLE OF OPERATING IN REAL TIME
ÉTABLISSEMENT D'UNE COMMUNICATION SÉCURISÉE À L'INTÉRIEUR D'UN RÉSEAU DE COMMUNICATION EN TEMPS RÉEL

(30) Priorität: 12.10.2016 DE 102016219848
(43) Veröffentlichungstag der Anmeldung: 26.06.2019
(73) Patentinhaber: Siemens Aktiengesellschaft, 80333 München (DE)
(72) Erfinder: FISCHER, Kai, 85598 Baldham (DE); HEINTEL, Markus, 81377 München (DE)
(86) Internationale Anmeldenummer: PCT/EP2017/072801
(87) Internationale Veröffentlichungsnummer: WO 2018/068965

(56) Entgegenhaltungen:
- EP-A1- 2 501 079
- DE-A1-102010 033 229
- DE-A1-102013 108 006
- DE-A1-102015 218 373
- US-A1- 2014 380 458

## Beschreibung

Die vorliegende Erfindung betrifft ein Verfahren und eine Kommunikationsanordnung zum Bereitstellen einer gesicherten Kommunikation innerhalb eines echtzeitfähigen Kommunikationsnetzwerkes, insbesondere im Umfeld einer industriellen Fertigung und/oder Automatisierung, sowie ein zugehöriges Computerprogramm(-produkt) .

### Hintergrund der Erfindung

In modernen Automatisierungsanlagen werden zur Steuerung von Fertigungsprozessen oder einzelnen Produktionsschritten IT-Systeme eingesetzt. Damit in einer solchen Anlage Feldgeräte wie Sensoren und Stellglieder (Aktoren) mit einem Automatisierungsgerät kommunizieren können, wird als Kommunikationsbussystem ein sogenannter Feldbus eingesetzt. Für die Kommunikation gibt es normierte Protokolle z.B. IEC 61158. Es gibt echtzeitfähige Ethernet-basierte Feldbusse, die z.B. in der Norm IEC 61784-2 zusammengestellt sind. Häufig verwendete echtzeitfähige Feldbusse sind Profibus und Profinet, Ethercat sowie Modbus.

Die Sicherheit industrieller Feldbusprotokolle ist wesentlich für eine industrielle Fertigungsumgebung. Der (kryptographische) Schutz von miteinander kommunizierenden Komponenten wie Werken bzw. Geräten spielt eine zunehmend wichtigere Rolle, um einen sicheren Betrieb gewährleisten zu können. Durch kryptographische Funktionen können Ziele wie Integrität, Vertraulichkeit oder Authentizität der Komponenten erreicht werden. Dadurch werden absichtliche, zielgerichtete Angriffe abgewehrt.

Der Begriff "Sicherheit" bezieht sich im Wesentlichen auf die Sicherheit, Vertraulichkeit und/oder Integrität von Daten sowie deren Übertragung und auch Sicherheit, Vertraulichkeit und/oder Integrität beim Zugriff auf entsprechende Daten. Auch die Authentifizierung bei Datenübertragungen beziehungsweise beim Datenzugriff gehört unter anderem zum Begriff "Sicherheit. Unter einer kryptografischen Funktionalität wird allgemein beispielsweise eine Funktion zur Verschlüsselung, zum Schutz der Vertraulichkeit, zum Integritätsschutz und/oder zur Authentifikation von Daten (z.B. Nutzerdaten, Steuerdaten, Konfigurationsdaten oder administrative Daten) verstanden. Die kryptografische Schutzfunktionalität kann dabei beispielsweise eine oder mehrere der nachfolgend aufgeführten Funktionalitäten umfassen:
- Schlüsselspeicherung
- System- und/oder Nutzer-Authentisierung
- Attestierung
- Verschlüsselung
- Entschlüsselung
- Berechnen einer kryptografischen Prüfsumme (z.B. Signatur)
- Prüfen einer kryptografischen Prüfsumme (z.B. Signatur)
- Schlüsselvereinbarung
- Schlüsselerzeugung
- Erzeugen von Zufallszahlen (z.B. Seed-Generierung)
- Lizenzierung
- Unterstützung von systemischen Überwachungsfunktionen (z.B. tamper-Schutz, Systemintegrität, SIEM)
- Überwachen oder Überwachung von Daten
- Validierung von Daten
- Filterung von Daten

Die aufgezählten kryptografischen Funktionalitäten können dabei jeweils wieder mit anderen/weiteren Verfahren oder Kombinationen dieser Verfahren ausgeführt sein.

Eine Datenschnittstelle zur Datenübertragung bzw. Kommunikation zwischen den genannten Komponenten kann beispielsweise eine drahtgebundene oder drahtlose Schnittstelle (z.B. Mobilfunkschnittstelle (GSM, UMTS, LTE), eine WLAN-, eine Bluetooth-, ZigBee- (insbesondere eingesetzt in der Haustechnik) oder eine NFC-Schnittstelle (NFC: Near Field Communication)) sein. Dabei kann die Datenschnittstelle als eine serielle oder parallele Datenschnittstelle ausgebildet und eingerichtet sein. Die Kommunikation zwischen den Komponenten ist nicht auf eine Punkt-zu-Punkt(Peer)-Kommunikation limitiert. Es sind auch Gruppenkommunikation, Broadcast-Nachrichten oder Publish/Subscribe Kommunikationsmuster denkbar.

Durch Manipulation von Feldbus-Nachrichten, auch Telegramme genannt kann z.B. die Qualität der produzierten Werke bzw. Güter beeinflusst werden, einzelne Fertigungskomponenten zerstört oder eine Fabrik zum Stillstand gebracht werden. Mit zunehmender Digitalisierung, bei der digitale Ethernetbasierten Feldbusprotokolle wie Profinet I/O, Ethercat oder Modbus eingesetzt werden, sind Angriffe auf die Netzwerkinfrastruktur und die Manipulation von Feldbus-Telegrammen deutlich einfacher geworden.

Eine Maßnahme, um industrielle Komponenten und Maschinen als vertrauenswürdig in verschiedenen Stufen zu einzustufen, ist sie in verschiedene Zonen einzuteilen (Zonenmodell). Es werden innerhalb einer solchen Zone in der Regel keine weiteren Schutzmaßnahmen. Die Zonen sind meist so gestaltet, dass die Kommunikation zwischen den Komponenten innerhalb der Zone stattfindet und nur bedingt mit Komponenten außerhalb der eigenen Zone kommuniziert werden kann. Der Inhalt bzw. die Knotenpunkte bzw. Komponenten innerhalb der Zone sind geschützt und es gibt dedizierte Übergabepunkte zu anderen Zonen. Beispiele für solche Zonenmodelle sind:
* Zellenschutzkonzept in der Profinet Security-Guideline Version 2.0 / Kapitel 10.2
* Conduits and zones in IEC62443
* NIST-SP 800-82 - Guide to Industrial Control Systems

Im Zuge von zukünftigen Industrie 4.0-Szenarien sind solche Zellschutzkonzepte nicht mehr geeignet, das zunehmend über die Zonengrenzen hinweg kommuniziert wird. Solche Übergangspunkte verzögern oft den Datenfluss und beeinflussen somit das Echtzeitverhalten.

In herkömmlichen IT-Netzwerken werden als Sicherheitsprotokolle häufig TLS (Transport Layer Security) bzw. IPSec (Internet Protokoll Security) eingesetzt. TLS ist - wie die Langbezeichnung schon besagt - auf Ebene 4 (Layer 4 bzw. Transportschicht) und IPSec auf Ebene bzw. Schicht 3 (Vermittlungsschicht) des in der Kommunikationstechnik verwendeten OSI-Referenzmodells definiert.

Ethernetprotokolle sowie auch die oben genannten für Feldbus-Protokolle kommen auf Ebene 2 des OSI-Referenzmodells zum Einsatz. Die sogenannte Sicherungsschicht (Layer 2) sorgt in der Regel für eine fehlerfreie Datenübertragung und ggf. für eine Datenflusskontrolle auf Sender- und Empfängerseite. Es werden üblicherweise die Nachrichten- bzw. Datenströme in Blöcke (auch Frames/Rahmen genannt) unterteilt. Mit Hilfe von Prüfsummen kann lediglich eine fehlerhafte Datenübertragung erkannt werden. Ein Schutz gegen aktive Manipulation besteht nicht. Die aktuellen Feldbus-Protokolle kennen keine Sicherheitsmaßnahmen, außer dem oben genannten Zonenmodell.

In dem Umfeld besteht weiterhin die Problematik, dass sich (kryptographische) Sicherheitsmaßnahmen auf das Zeitverhalten umso mehr auswirken, umso höher sie in einer OSI-Schicht/Ebene realisiert sind. Demnach sind sie für echtzeitfähige Kommunikationsprotokolle wie z.B. Profinet etc. nicht geeignet. Des weiteren sollen die Protokolle auf Ebene 1 und 2 des OSI-Referenzmodells ohne Erweiterung mit kryptographischen Daten unverändert bleiben, damit diese Protokolle weiterhin verwendet werden können.

Aus DE 10 2010 033 229 A1 ist ein Verfahren und ein System zum manipulationssicheren Übertragen von Steuerdaten über ein Übertragungsnetzwerk bekannt. Diese Steuerdaten können hierbei "inband" im selben Netzwerk oder auch "outband", d.h. separat im selben Netzwerk von einer Steuereinheit eines ersten Steuernetzwerkes zu einer zweiten Steuereinheit eines zweiten Steuernetzwerkes übertragen werden. Da die Steuernetzwerke mit dem Übertragungsnetzwerk über Gateways (Übergangspunkte) gekoppelt werden, ist das in dieser Schrift offenbarte Szenario dem oben erläuterten Zonenmodell ähnlich.

In DE 102015218373.4 ist bereits ein Verfahren zum Überwachen einer Integrität eines verteilten Systems vorgeschlagen worden. Hierbei wird stichprobenartiges ein Testdatensatz bestimmt, welcher abhängig von einem über eine Kommunikationsverbindung des verteilten Systems zu übertragenden Datensatz ist. Des weiteren wird der Testdatensatz kryptographisch geschütztes an eine Prüfeinheit bereitgestellt, wobei eine Übertragung des Datensatzes über die Kommunikationsverbindung durch das Bestimmen und Bereitstellen unbeeinflusst erfolgt und wobei der kryptographisch geschützte Testdatensatz durch die Prüfeinheit in Hinblick auf Integrität anhand von kryptographischen Berechnungen und von Plausibilitätsinformationen geprüft wird. Hierbei steht ein rechenarmes Stichprobenverfahren im Vordergrund. Es sollen jedoch gezielt und nicht stichprobenartig Nachrichten einer Integritätsprüfung unterzogen werden.

Es ist Aufgabe der Erfindung, zielgerichtete, echtzeitfähige Sicherheits- bzw. Schutzmaßnahmen für die Kommunikationsprotokolle unterhalb Ebene 3 des OSI-Referenzmodells, insbesondere industrielle Feldbusprotokolle, ohne Eingriff in das Kommunikationsprotokoll bereitzustellen.

### Darstellung der Erfindung

Diese Aufgabe wird durch die unabhängigen Patentansprüche gelöst. Vorteilhafte Weiterbildungen sind Gegenstand der abhängigen Ansprüche.

Die Erfindung beansprucht ein Verfahren zum Bereitstellen einer gesicherten Kommunikation zwischen mindestens einem ersten Kommunikationspartner und wenigstens einem zweiten Kommunikationspartner innerhalb eines echtzeitfähigen Kommunikationsnetzwerkes, insbesondere im Umfeld einer industriellen Fertigung und/oder Automatisierung, aufweisend folgende Schritte:
- Bereitstellen von mindestens zwei Schnittstellen, die jeweils einem Kommunikationspartner zugeordnet ist oder wird,
- Herausfiltern von mindestens einer gesendeten oder empfangenen Nachricht zwischen den Kommunikationspartnern durch die jeweils zugeordnete Schnittstelle mit Hilfe von mindestens einem vorgebbaren Filterkriterium, wobei die mindestens eine herausgefilterte Nachricht einer Integritätsprüfung unterzogen wird,
- wobei zur Integritätsprüfung ein erster Integritätsreferenzwert zu mindestens einer herausgefilterten gesendeten oder empfangenen Nachricht beim ersten Kommunikationspartner und zumindest ein zweiter Integritätsreferenzwert zu mindestens einer herausgefilterten empfangenen oder gesendeten Nachricht bei dem wenigstens zweiten Kommunikationspartner gebildet wird,
- Bereitstellen einer Prüfungsstelle zur Integritätsprüfung,
- Korrelieren des ersten Integritätsreferenzwertes mit dem zumindest zweiten Integritätsreferenzwert und Vergleichen derselben durch die Prüfungsstelle,
- Ausgeben einer Warn- und/oder Alarmmeldung durch die Prüfungsstelle oder Weiterleiten der von Prüfungsstelle stammenden Warn- und/oder Alarmmeldung an eine entsprechende Gegenmaßnahmen einleitende Stelle, wenn die korrelierten Integritätsreferenzwerte voneinander abweichen.

Der erste und der zweite Integritätsreferenzwert können dabei so voneinander abweichen, dass sie außerhalb eins vorgebbaren Toleranzbereichs liegen. In dem Kommunikationsnetzwerk sind mehrere Kommunikationspartner denkbar. Die Erfindung ist nicht auf eine Punkt-zu-Punkt Kommunikation beschränkt, sondern kann auch eine Punkt-zu -Mehrpunkt- Kommunikation (Broadcast) bedienen. Es ist auch denkbar, dass mehrere Prüfungsstellen im Kommunikationsnetz angeordnet sind, die jeweils die Integritätsprüfung für einen Teilbereich des Kommunikationsnetzes übernehmen und ggf. von einer weiteren übergeordneten Stelle koordiniert werden.

Der Vorteil der Erfindung liegt in der Erkennung und Abwehr von Angriffen, bei denen ein unberechtigter Angreifer Zugriff auf Werke bzw. Geräte erlangen will. Somit kann auch die Integrität von Nachrichten überwacht werden, ohne eine Rückwirkung auf das Zeitverhalten zu haben.

Ein weiterer Vorteil der Erfindung liegt darin, dass die Erfindung nicht auf eine eingangs erläuterte Zone begrenzt ist, sondern ggf. über mehrere Übergangspunkte hinweg eingesetzt werden kann. Zudem werden von der Prüfungsstelle nicht die Nachrichten selbst überwacht, sondern lediglich die Integritätsreferenzwerte korreliert und überprüft, wodurch die Netzlast verringert werden kann. Durch die erfindungsgemäße Art der Integritätsprüfung können auch vertrauliche/sensible Daten überprüft werden.

Eine Weiterbildung der Erfindung sieht vor, dass zur Kommunikation zwischen den Kommunikationspartnern ein Kommunikationsprotokoll unterhalb von Ebene 3, auch Vermittlungsschicht genannt, des in der Kommunikationstechnik verwendeten OSI-Referenzmodells eingesetzt wird. Zur Kommunikation zwischen den Kommunikationspartnern kann auch ein Feldbus-Kommunikationsprotokoll eingesetzt wird.

Es ist erfindungsgemäß insbesondere eine sogenannte out-ofband-Integritätsprüfung vorgesehen, ohne dass Eingriffe in das verwendete Feldbusprotokoll notwendig sind. Es können somit Angriffe frühzeitig erkannt werden.

Eine Weiterbildung der Erfindung sieht vor, dass das mindestens eine Filterkriterium den Nachrichtentyp, den Sender und/oder Empfänger, eine zufällige Nachrichtenherausfilterung, eine Bandbreite und/oder Netzlast und/oder einen filterbaren Nachrichteninhalt und/oder jede Kombination derer betrifft.

Eine Weiterbildung der Erfindung sieht vor, dass die genannten Schnittstellen passiv gesendeten und/oder empfangenen Nachrichten mitlesen. Somit haben die Schnittschnellen - auch als Sicherheitsschnittstellen bezeichnet - keinen Einfluss auf den Nachrichtenfluss.

Die Überwachungs- bzw. Filterkriterien können flexibel in einer Filtereinheit der Schnittstellen (können auch als Security-Sensoren (Sicherheits-Sensoren) ausgebildet sein) konfiguriert und kontext-spezifisch angepasst werden. Die Filterkriterien können durch die Prüfungsstelle synchron gehalten werden.

Der erste Integritätsreferenzwert kann hierbei mehrere Integritätsreferenzwerte umfassen und/oder der zweite Integritätsreferenzwert kann ebenfalls mehrere Integritätsreferenzwerte umfassen. Solche Integritätsreferenzwerte können jeweils ein Hashwert einer herausgefilterten gesendeten/empfangenen Nachricht und/oder von Teilen derselben und/oder einer Akkumulation von mehreren herausgefilterten Nachrichten und/oder deren Teile sein.

Eine Weiterbildung der Erfindung sieht vor, dass der mindestens eine erste Integritätsreferenzwert aus einem vorgebbaren Zeitfenster mit den korrelierenden zumindest zweiten Integritätsreferenzwert aus demselben Zeitfenster verglichen wird.

Eine Weiterbildung der Erfindung sieht vor, dass die Kommunikation zwischen den Kommunikationspartnern und die Kommunikation zwischen der jeweiligen Schnittstelle und der Prüfungsstelle in voneinander unabhängigen Kanälen durchgeführt wird.

Ein weiterer Aspekt der Erfindung sieht die Verwendung einer Vorrichtung zur Integritätsprüfung vor, die geeignet ist, eine gesicherten Kommunikation zwischen mindestens zwei Kommunikationspartnern mit mindestens zwei Schnittstellen, die jeweils einem Kommunikationspartner zugeordnet sind, innerhalb eines echtzeitfähigen Kommunikationsnetzwerkes, insbesondere im Umfeld einer industriellen Fertigung und/oder Automatisierung, bereitzustellen, aufweisend:
- eine Einheit zum Empfang eines gebildeten ersten Integritätsreferenzwertes zu mindestens einer herausgefilterten Nachricht und zum Empfang zumindest eines gebildeten zweiten Integritätsreferenzwertes zu mindestens einer herausgefilterten Nachricht, wobei die mindestens eine herausgefilterte Nachricht durch die jeweils zugeordnete Schnittstelle mit Hilfe von mindestens einem vorgebbaren Filterkriterium herausgefiltert wird,
- eine Einheit zum Korrelieren des ersten Integritätsreferenzwertes mit dem zumindest zweiten Integritätsreferenzwert und zum Vergleichen derselben,
- eine Einheit zum Ausgeben einer Warn- und/oder Alarmmeldung, die für eine entsprechende Gegenmaßnahmen einleitende Stelle vorgesehen ist, wenn die korrelierten Integritätsreferenzwerte voneinander abweichen.

Die Vorrichtung kann entsprechend der Ausführungsformen/Weiterbildungen zum oben genannten Verfahren aus- bzw. weitergebildet sein.

Die oben genannte Prüfungsstelle kann als vorstehend beschriebene Vorrichtung zur Integritätsprüfung ausgebildet sein.

Ein weiterer Aspekt der Erfindung sieht eine Anordnung, insbesondere eine Kommunikationsanordnung bzw. Kommunikationssystem zum Bereitstellen einer gesicherten Kommunikation zwischen mindestens zwei Kommunikationspartnern innerhalb eines echtzeitfähigen Kommunikationsnetzwerkes, insbesondere im Umfeld einer industriellen Fertigung und/oder Automatisierung, vor, aufweisend mindestens zwei den Kommunikationspartnern zugeordneten Sicherheitsschnittstellen mit jeweils mindestens einer Einheit zum Herausfiltern von mindestens einer gesendeten oder empfangenen Nachricht mit Hilfe von mindestens einem vorgegebenen Filterkriterium und mit jeweils mindestens einer Einheit zur Bildung eines Integritätsreferenzwertes zu einer herausgefilterten Nachricht und zur Übertragung des Integritätsreferenzwertes an wenigstens eine Integritätsreferenzwerte prüfende Vorrichtung, die eingerichtet ist zum Korrelieren des ersten Integritätsreferenzwertes (I1) mit dem zumindest zweiten Integritätsreferenzwert (I2) und Vergleichen derselben, und die eingerichtet ist zum Ausgeben einer Warn- und/oder Alarmmeldung oder Weiterleiten der Warn- und/oder Alarmmeldung an eine entsprechende Gegenmaßnahmen einleitende Stelle, wenn die korrelierten Integritätsreferenzwerte voneinander abweichen.

Jeder Sicherheitsschnittstelle kann ferner eine Einheit zum Herausfiltern von mindestens einer gesendeten oder empfangenen Nachricht zwischen den Kommunikationspartnern mit Hilfe von mindestens einem vorgebbaren Filterkriterium zugeordnet sein, wobei das mindestens eine Filterkriterium durch die oben genannte Vorrichtung synchronisierbar ist.

Die Sicherheitsschnittstelle, die dem die Nachricht empfangenden Kommunikationspartner zugeordnet ist und/oder, die dem die Nachricht sendenden Kommunikationspartner zugeordnet ist, kann zudem eine Einheit zum Empfang eines Integritätswertvergleichsergebnisses von der oben genannten Vorrichtung aufweisen.

Die Sicherheitsschnittstelle kann des Weiteren eine Ausgabeeinheit zum Ausgeben einer Warn- und/oder Alarmmeldung an eine entsprechende Gegenmaßnahmen einleitende Stelle in Abhängigkeit vom Integritätswertvergleichsergebnis aufweisen.

Die Kommunikationsanordnung kann entsprechend der Ausführungsformen/Weiterbildungen zur oben genannten Vorrichtung und/oder zum oben genannten Verfahren aus- bzw. weitergebildet sein.

Die vorstehend genannten Einheiten können in Software, Firmware und/oder Hardware implementiert sein. Sie können als eine Art Funktionseinheiten verstanden werden, die auch in Ihrer Funktion in beliebiger Kombination als eine einzige Einheit integriert sein können.

Ein weiterer Aspekt der Erfindung kann ein Computerprogramm bzw. ein Computerprogrammprodukt mit mindestens einem Computerprogramm mit Mitteln zur Durchführung des Verfahrens und dessen genannte Ausgestaltungen sein, wenn das Computerprogramm(produkt) bzw. das mindestens eine Computerprogramm verteilt innerhalb der Kommunikationsanordnung nach oben beschriebener Art zur Ausführung gebracht wird.

Obige Vorrichtungen, Anordnungen und gegebenenfalls das Computerprogramm(produkt) können im Wesentlichen analog wie das Verfahren und dessen Ausgestaltungen bzw. Weiterbildungen entsprechend aus- bzw. weitergebildet werden.

Ausführungsbeispiel(e) :
Weitere Vorteile, Einzelheiten und Weiterbildungen der Erfindung ergeben sich aus der nachfolgenden Beschreibung von Ausführungsbeispielen in Verbindung mit den Zeichnungen.

### Dabei zeigt

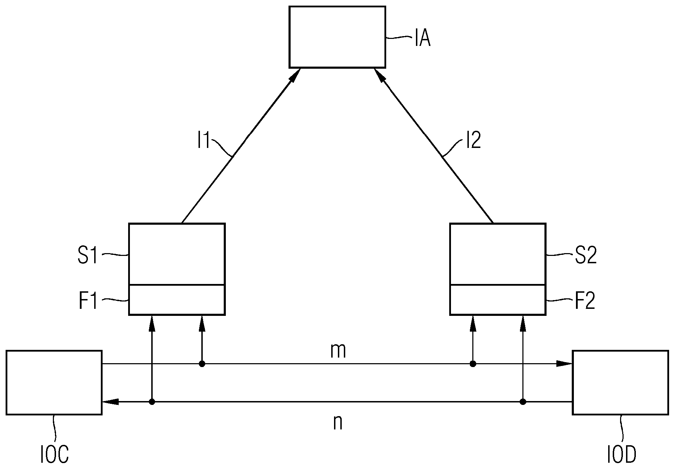

Die Figur das erfindungsgemäße Vorgehen zur Integritätsprüfung in einer Feldbuskommunikation.

Gemäß der Figur tauscht ein IO-Controller IOC mit einem IO-Device IOD Nachrichten m, n beispielsweise über ein Kommunikationsnetzwerk z.B. Profinet IRT aus. Der IO-Controller IOC sendet beispielsweise eine Nachricht m (Profinet IRT Telegramm) an das IO-Device. Die dem IO-Controller zugeordnete Security- bzw. Sicherheitsschnittstelle S1, ggf. ausgebildet als ein Sensor, liest die Nachricht m mit und entscheidet an Hand von (Filter-)Regeln, die in einer Filterfunktion F1 implementiert sein können, dass eine Integritätsprüfung für die Nachricht m aktiviert ist.

Die Filterfunktion kann Regeln für die Prüfung bzw. Überwachung der Nachrichten umfassen. Demnach kann festgelegt werden:
- Welcher Nachrichtentyp (z.B. nur Profinet-Nachrichten keine http-Nachrichten) zu überwachen ist,
- welche Nachricht von welchen Sender(n) bzw. von welchen Empfänger(n) zu überwachen ist,
- ob die Nachrichten zufällig oder nach einer vorgebbaren Bedingung (z.B. Bandbreite/Last des Netzwerkes) überwacht werden sollen,
- welcher Nachrichteninhalt anhand von vorgebbaren Filtermasken bzw. Templates überwacht werden soll, etc.

Die Sicherheitsschnittstelle bzw. der Security-Sensor S1 berechnet einen Integritäts-Referenzwert I1 und sendet diesen an eine Prüfungsstelle IA, auch Integrity Authority genannt. Bevor IOC und IOD miteinander kommunizieren, wird eine sichere Verbindung zur Prüfungsstelle IA aufgebaut und authentifizieren sich dort.

Das IO-Device IOD empfängt die Nachricht m und kann diese verarbeiten. Die dem IO-Device IOD zugeordnete Security-Schnittstelle S2, ggf. ausgebildet als Sensor, liest die Nachricht m mit und entscheidet an Hand von (Filter-)Regeln, die in einer Filterfunktion F2 implementiert sein können, dass eine Integritätsprüfung für die Nachricht m aktiviert ist. Vorzugsweise sind die Security-Sensoren S1 und S2 passiv ausgebildet. Sie lesen lediglich mit und wirken nicht weiter auf die Kommunikation zwischen IOC und IOD ein. Daher wird die Echtzeitfähigkeit der Kommunikation zwischen IOC und IOD nicht negativ beeinflusst.

Die Sicherheitsschnittstelle bzw. der Security-Sensor S2 berechnet einen Integritätsreferenzwert I2 und sendet diesen an die Prüfungsstelle IA. Die Prüfungsstelle vergleicht die Integritätsreferenzwerte I1 und I2 miteinander und kann bei Ungleichheit dieser Werte eine mögliche Manipulation entdecken.

Die Integritätsreferenzwerte bilden die Integrität der zwischen den Kommunikationspartnern bzw. Komponenten, im Beispiel IOC und IOD, ausgetauschten Nachrichten ab. Damit die Prüfungsstelle IA eine Aussage bzw. Bewertung über den Status der Integrität machen kann, können zur Integritätsprüfung sogenannte Plausibilitätsdaten wie z.B. z.B. Projektierungsdaten, Konfigurationsdaten und/oder physikalischen Eigenschaften von Komponenten, herangezogen werden. Die Plausibilitätsdaten können ferner vorberechnete, z.B. aus einer Simulation abgeleitete Daten umfassen. Ebenso können in Echtzeit vorliegende, ggf. redundante Daten, die gegebenenfalls von sogenannten digitalen Zwillingsdaten stammen, untereinander abgeglichen werden. Es können mehrere Arten der Integrationsprüfung mit Hilfe verschiedener Plausibilitätsdaten kombiniert werden.

Die Integritätsprüfung kann zeitverzögert und nachgelagert durchgeführt werden. In der Regel wird in einem Fertigungsumfeld bei Erkennung von manipulierten Nachrichten eine Warnmeldung bzw. ein Sicherheitsalarm ausgelöst. Die Fertigung kann dann solange weiterlaufen, bis aufgrund der Warnmeldung/ des Sicherheitsalarms eine geeignete Gegenmaßnahme von ggf. einer dritten, die Gegenmaßnahme einleitenden Stelle (nicht in der Figur dargestellt) festgelegt wird. Die Integritätsprüfung kann jederzeit kontextspezifisch angepasst werden.

Zudem sollten auch die Integrität und Authentizität der Integritätsreferenzwerte auf der Kommunikationsstrecke zwischen dem Security-Sensor S1, S2 und der Prüfungsstelle IA geschützt werden. Diese Kommunikation kann über einen unabhängigen Kanal erfolgen, wobei klassische IP-basierte Kommunikationsprotokolle wie z.B. TLS bzw. IPSec angewendet werden können.

Als Integritätsreferenzwerte können reine Hashwerte (Einheitsfunktionen) der gesendeten/empfangen Nachricht, von Teilen der Nachricht oder der Hashwert einer Akkumulation von Nachrichten sein. Der Integritätsreferenzwert kann neben einer Integritätsprüfsumme auch Daten wie z.B. Zeitstempel und Framezähler enthalten, die zur Korrelation bzw. Zuordnung der Integritätsreferenzwerte I1 und I2 durch die Prüfungsstelle benötigt werden. Auch können Informationen über die Historie der Nachricht in den Integritätswert einfließen. Es ist auch denkbar, Integritätsreferenzwerte von vertraulichen Informationen zu generieren, ohne Notwendigkeit, den Klartext dem Security-Sensor oder der Prüfungsstelle zu preiszugeben.

Falls eine eindeutige Korrelation aufgrund von Randbedingungen wie z.B. Hardware-, Netzwerk- oder logische Adressen der miteinander kommunizierenden Komponenten oder deren Hashwerte nicht ohne weiteres möglich ist, kann ein Zeitfensterbasierter Ansatz verwendet werden. Als Zeitfenster wird ein Zeitabschnitt T mit Startzeitpunkt a und Endzeitpunkt e bezeichnet. Die Menge der Integritätsreferenzwerte I1 [] aus einem Zeitfenster T0 = [s0..e0] muss mit der Menge der Integritätsreferenzwerte I2 [] aus demselben Zeitfenster übereinstimmen. Zeitfenster können sequenziell, disjunkt, oder überlappend verwendet werden.

Die Korrelation zwischen den Integritätsreferenzwerten I1 und I2 kann auch dadurch hergestellt werden, indem das eine Filterkriterium oder mehrere Filterkriterien der Filterfunktionen F1 und F2 durch die Prüfungsstelle, die die Filterkriterien vorgeben kann, synchronisiert werden. Damit kann sichergestellt werden, dass die Integritätswerte zu derselben Nachricht z.B. m oder zumindest zu derselben Nachrichtenart etc. miteinander verglichen werden.

Eine weitere Ausgestaltung besteht darin, dass sich die Kommunikationspartner mit der Prüfungsstelle bei dieser authentifizieren müssen. Die Authentifikationsinformation kann dabei eine Information über den Security-Level (Sicherheitsebene) beinhalten (z.B. IEC62443 SL-1 bis SL-4), so dass durch die Prüfungsstelle festgestellt werden kann, ob die zwei Kommunikationspartner, im Beispiel S1 mit IOC und S2 mit IOD, denselben Security-Level besitzen, oder ob z.B. Daten von einem Gerät mit höherem Security-Level zu einem Gerät mit einem niedrigerem Security-Level übertragen werden oder umgekehrt.

Autorisierte Kommunikationspartner auf der Kommunikationsstrecke zwischen IOC und IOD dürfen/können die Nachrichten legitim verändern. Diese Veränderung können dann der Prüfungsstelle IA gemeldet werden. Eine Integritätsverletzung zwischen IOC und IOD kann somit über die Prüfungsstelle IA legitimiert werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Der Begriff "Prozessor", "zentrale Signalverarbeitung", "Steuereinheit" oder "Datenauswertemittel", wie hier verwendet, umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequenziellen Verarbeitung bzw. Ausführung von Instruktionen ausgelegt bzw. konfiguriert sein.

## Patentansprüche

1. Verfahren zum Bereitstellen einer gesicherten Kommunikation zwischen mindestens einem ersten Kommunikationspartner (IOC) und wenigstens einem zweiten Kommunikationspartner (IOD) innerhalb eines echtzeitfähigen Kommunikationsnetzwerkes, insbesondere im Umfeld einer industriellen Fertigung und/oder Automatisierung, aufweisend folgende Schritte:
- Bereitstellen von mindestens zwei Schnittstellen (S1, S2), die jeweils einem Kommunikationspartner (IOC, IOD) zugeordnet ist oder wird,
- Herausfiltern von mindestens einer gesendeten oder empfangenen Nachricht (m, n) zwischen den Kommunikationspartnern (IOC, IOD) durch die jeweils zugeordnete Schnittstelle mit Hilfe von mindestens einem vorgebbaren Filterkriterium, wobei die mindestens eine herausgefilterte Nachricht (m, n) einer Integritätsprüfung unterzogen wird,
- wobei zur Integritätsprüfung ein erster Integritätsreferenzwert (I1) zu mindestens einer herausgefilterten gesendeten oder empfangenen Nachricht (m) beim ersten Kommunikationspartner (IOC) und zumindest ein zweiter Integritätsreferenzwert (I2) zu mindestens einer herausgefilterten empfangenen oder gesendeten Nachricht bei dem wenigstens zweiten Kommunikationspartner (IOD) gebildet wird,
- Bereitstellen einer Prüfungsstelle (IA) zur Integritätsprüfung,
- Korrelieren des ersten Integritätsreferenzwertes (I1) mit dem zumindest zweiten Integritätsreferenzwert (I2) und Vergleichen derselben durch die Prüfungsstelle (IA),
- Ausgeben einer Warn- und/oder Alarmmeldung durch die Prüfungsstelle oder Weiterleiten der von Prüfungsstelle stammenden Warn- und/oder Alarmmeldung an eine entsprechende Gegenmaßnahmen einleitende Stelle, wenn die korrelierten Integritätsreferenzwerte voneinander abweichen.

2. Verfahren nach dem vorhergehenden Anspruch, **dadurch gekennzeichnet, dass** zur Kommunikation zwischen den Kommunikationspartnern (IOC, IOD) ein Kommunikationsprotokoll unterhalb von Ebene 3, auch Vermittlungsschicht genannt, des in der Kommunikationstechnik verwendeten OSI-Referenzmodells eingesetzt wird.

3. Verfahren nach einem der vorhergehenden Ansprüche, **dadurch gekennzeichnet, dass** zur Kommunikation zwischen den Kommunikationspartnern (IOC, IOD) ein Feldbus-Kommunikationsprotokoll eingesetzt wird.

4. Verfahren nach einem der vorhergehenden Ansprüche, **dadurch gekennzeichnet, dass** das mindestens eine Filterkriterium den Nachrichtentyp, den Sender und/oder Empfänger, eine zufällige Nachrichtenherausfilterung, eine Bandbreite und/oder Netzlast und/oder einen filterbaren Nachrichteninhalt und/oder jede Kombination derer betrifft.

5. Verfahren nach einem der vorhergehenden Ansprüche, **dadurch gekennzeichnet, dass** die genannten Schnittstellen (S1, S2) passiv gesendeten und/oder empfangenen Nachrichten mitlesen.

6. Verfahren nach einem der vorhergehenden Ansprüche, **dadurch gekennzeichnet, dass** als Integritätsreferenzwert ein Hashwert einer herausgefilterten gesendeten/empfangenen Nachricht und/oder von Teilen derselben und/oder einer Akkumulation von mehreren herausgefilterten Nachrichten und/oder deren Teile verwendet wird.

7. Verfahren nach einem der vorhergehenden Ansprüche, **dadurch gekennzeichnet, dass** der mindestens eine erste Integritätsreferenzwert (I1) aus einem vorgebbaren Zeitfenster mit den korrelierenden zumindest zweiten Integritätsreferenzwert (I2) aus demselben Zeitfenster verglichen wird.

8. Verfahren nach einem der vorhergehenden Ansprüche, **dadurch gekennzeichnet, dass** die Kommunikation zwischen den Kommunikationspartnern (IOC, IOD) und die Kommunikation zwischen der jeweiligen Schnittstelle (S1, S2) und der Prüfungsstelle (IA) in voneinander unabhängigen Kanälen durchgeführt wird.

9. Kommunikationsanordnung zum Bereitstellen einer gesicherten Kommunikation zwischen mindestens zwei Kommunikationspartnern (IOC, IOD) innerhalb eines echtzeitfähigen Kommunikationsnetzwerkes, insbesondere im Umfeld einer industriellen Fertigung und/oder Automatisierung, aufweisend mindestens zwei jeweils einem der Kommunikationspartner (IOC, IOD) zugeordneten Schnittstellen (S1, S2) mit jeweils mindestens einer Einheit (F1, F2) zum Herausfiltern von mindestens einer gesendeten oder empfangenen Nachricht (m, n) mit Hilfe von mindestens einem vorgegebenen Filterkriterium, mit jeweils mindestens einer Einheit zur Bildung eines Integritätsreferenzwertes (I1, I2) zu einer herausgefilterten Nachricht (m, n) und zur Übertragung des Integritätsreferenzwertes an wenigstens eine Vorrichtung (IA) zur Integritätsprüfung der Integritätsreferenzwerte,
mit der wenigstens einen Vorrichtung (IA) zur Integritätsprüfung, die eingerichtet ist zum Korrelieren des ersten Integritätsreferenzwertes (I1) mit dem zumindest zweiten Integritätsreferenzwert (I2) und Vergleichen derselben, und die eingerichtet ist zum Ausgeben einer Warn- und/oder Alarmmeldung oder Weiterleiten der Warn- und/oder Alarmmeldung an eine entsprechende Gegenmaßnahmen einleitende Stelle, wenn die korrelierten Integritätsreferenzwerte voneinander abweichen.

10. Kommunikationsanordnung nach dem vorhergehenden Anspruch, wobei das mindestens eine Filterkriterium durch die Vorrichtung nach einem der vorstehenden Vorrichtungsansprüche synchronisierbar ist.

11. Kommunikationsanordnung nach einem der vorhergehenden Anordnungsansprüche, **dadurch gekennzeichnet, dass** die Schnittstelle, die dem die Nachricht empfangenden Kommunikationspartner (z.B. IOD) zugeordnet ist und/oder die dem die Nachricht sendenden Kommunikationspartner zugeordnet ist, zudem eine Einheit zum Empfang eines Integritätswertvergleichsergebnisses von der Vorrichtung nach einem der vorherstehenden Vorrichtungsansprüche aufweist.

12. Kommunikationsanordnung nach dem vorhergehenden Anspruch, **dadurch gekennzeichnet, dass** die Schnittstelle zudem eine Ausgabeeinheit zum Ausgeben einer Warn- und/oder Alarmmeldung an eine entsprechende Gegenmaßnahmen einleitende Stelle in Abhängigkeit vom Integritätswertvergleichsergebnis aufweist.

13. Kommunikationsanordnung nach einem der vorhergehenden Anordnungsansprüche, **dadurch gekennzeichnet, dass** die Schnittstellen (S1, S2) passiv ausgebildet sind.

14. Kommunikationsanordnung nach einem der vorhergehenden Anordnungsansprüche, **dadurch gekennzeichnet, dass** die Kommunikation zwischen den Kommunikationspartnern (IOC, IOD) und die Kommunikation zwischen der jeweiligen Schnittstelle (S1, S2) und der Vorrichtung (IA) zur Integritätsprüfung nach einem der vorstehenden Vorrichtungsansprüche in voneinander unabhängigen Kanälen durchführbar ist.

## Claims

1. Method for providing secure communication between at least one first communication partner (IOC) and at least one second communication partner (IOD) within a communication network capable of operating in real time, particularly in the context of industrial production and/or automation, comprising the following steps:
- provision of at least two interfaces (S1, S2), each of which has been or is assigned to a communication partner (IOC, IOD) ;
- isolation of at least one message (m, n) transmitted or received between the communication partners (IOC, IOD) at the respectively associated interface, by means of at least one predefinable filtering criterion, wherein the at least one isolated message (m, n) undergoes an integrity check;
- wherein, for the purposes of integrity checking, a first integrity reference value (I1) for at least one isolated message (m) transmitted or received by the first communication partner (IOC), and at least one second integrity reference value (12) for at least one isolated message received or transmitted by the at least second communication partner (IOD) are constituted;
- provision of a test unit (IA) for integrity checking;
- correlation of the first integrity reference value (I1) with the at least second integrity reference value (12), and comparison of same by the test unit (IA);
- output of a warning and/or alarm signal by the test unit, or referral of the warning and/or alarm signal originating from the test unit to an authority responsible for the initiation of corresponding counter-measures, in the event that the correlated integrity reference values deviate from each other.

2. Method according to the preceding claim, **characterized in that**, for communication between the communication partners (IOC, IOD), a communication protocol below level 3, also called the network layer, of the OSI reference model used in communication technology is employed.

3. Method according to one of the preceding claims, **characterized in that**, for communication between the communication partners (IOC, IOD), a fieldbus communication protocol is employed.

4. Method according to one of the preceding claims, **characterized in that** the at least one filtering criterion relates to the message type, the sender and/or receiver, a random message isolation function, a bandwidth and/or network load and/or a filterable message content, and/or any combination thereof.

5. Method according to one of the preceding claims, **characterized in that** the above-mentioned interfaces (S1, S2) concomitantly read passively transmitted and/or received messages.

6. Method according to one of the preceding claims, **characterized in that**, as an integrity reference value, a hash value of an isolated transmitted/received message and/or elements thereof, and/or an accumulation of a plurality of isolated messages and/or elements thereof is employed.

7. Method according to one of the preceding claims, **characterized in that** the at least one first integrity reference value (I1) from a predefinable time window is compared with the correlating at least second integrity reference value (12) from the same time window.

8. Method according to one of the preceding claims, **characterized in that** the communication between the communication partners (IOC, IOD) and the communication between the respective interface (S1, S2) and the test unit (IA) are executed in mutually independent channels.

9. Communication arrangement for providing secure communication between at least two communication partners (IOC, IOD) within a communication network capable of operating in real time, particularly in the context of industrial production and/or automation, comprising
at least two interfaces (S1, S2) which are each assigned to one of the communication partners (IOC, IOD), each having at least one unit (F1, F2) for the isolation of at least one transmitted or received message (m, n) by means of at least one predefined filtering criterion, each having at least one unit for the constitution of an integrity reference value (I1, I2) for an isolated message (m, n), and for the transmission of the integrity reference value to at least one integrity reference value checking device (IA),
having the at least one integrity checking device (IA) which is configured to correlate the first integrity reference value (I1) with the at least second integrity reference value (12) and to compare same, and is configured to output a warning and/or alarm signal or to refer the warning and/or alarm signal to an authority responsible for the initiation of corresponding counter-measures, in the event that the correlated integrity reference values deviate from each other.

10. Communication arrangement according to the preceding claim, wherein the at least one filtering criterion is synchronizable by means of the device according to one of the preceding device claims.

11. Communication arrangement according to one of the preceding arrangement claims, **characterized in that** the interface which is assigned to the message-receiving communication partner (e.g. IOD) and/or which is assigned to the message-transmitting communication partner moreover comprises a unit for the reception of an integrity value comparison result from the device according to one of the preceding device claims.

12. Communication arrangement according to the preceding claim, **characterized in that** the interface further comprises an output unit for the output of a warning and/or alarm signal to an authority responsible for the initiation of corresponding counter-measures, depending upon the integrity value comparison result.

13. Communication arrangement according to one of the preceding arrangement claims, **characterized in that** the interfaces (S1, S2) are configured passively.

14. Communication arrangement according to one of the preceding arrangement claims, **characterized in that** the communication between the communication partners (IOC, IOD) and the communication between the respective interface (S1, S2) and the integrity checking device (IA) according to one of the preceding device claims can be executed in mutually independent channels.

## Revendications

1. Procédé de mise à disposition d'une communication sécurisée entre au moins un premier partenaire (IOC) de communication et au moins un deuxième partenaire (IOD) de communication au sein d'un réseau de communication apte au temps réel, notamment dans l'environnement d'une fabrication et/ou d'une automatisation industrielle, comportant les stades suivants :
- on se procure au moins deux interfaces (S1, S2), qui est ou seront associées respectivement à un partenaire (IOC, IOD) de communication,
- on filtre au moins un message (m, n), envoyé ou reçu entre les partenaires (IOC, IOD) de communication par l'interface associée respectivement, à l'aide d'au moins un critère de filtrage pouvant être donné à l'avance, le au moins un message (m, n) filtré étant soumis à un contrôle d'intégrité,
- dans lequel pour le contrôle d'intégrité on forme une première valeur (I1) de référence d'intégrité sur le au moins un message (m) filtré envoyé ou reçu chez le premier partenaire (IOC) de communication et au moins une deuxième valeur (I2) de référence d'intégrité sur le au moins un message filtré reçu ou envoyé chez le au moins le deuxième partenaire (IOD) de communication,
- on se procure un point (IA) de contrôle pour le contrôle d'intégrité,
- on met en corrélation la première valeur (I1) de référence d'intégrité avec la au moins deuxième valeur (I2) de référence d'intégrité et on les compare par le point (IA) de contrôle,
- on émet un message d'avertissement et/ou d'alerte par le point de contrôle ou on achemine le message d'avertissement et/ou d'alerte issu du point de contrôle à un point initiant des contre-mesures adéquates, si les valeurs de référence d'intégrité mises en corrélation s'écartent l'une de l'autre.

2. Procédé suivant la revendication précédente, **caractérisé en ce que** pour la communication entre les partenaires (IOC, IOD) de communication, on utilise un protocole de communication de plan 3, dénommé également couche de commutation, du modèle de référence OSI utilisé dans la technique de communication.

3. Procédé suivant l'une des revendications précédentes, **caractérisé en ce que** pour la communication entre les partenaires (IOC, IOD) de communication, on utilise un protocole de communication à bus sur site.

4. Procédé suivant l'une des revendications précédentes, **caractérisé en ce que** le au moins un critère de filtrage concerne le type de message, l'émetteur et/ou le récepteur, un filtrage de message aléatoire, une largeur de bande et/ou une charge de réseau et/ou un contenu de message filtrable et/ou toute combinaison de ceux-ci.

5. Procédé suivant l'une des revendications précédentes, **caractérisé en ce que** les interfaces (S1, S2) mentionnées lisent passivement des messages envoyés et/ou reçus.

6. Procédé suivant l'une des revendications précédentes, **caractérisé en ce que** l'on utilise comme valeur de référence d'intégrité une valeur de Hash d'un message filtré envoyé/reçu et/ou des parties de celui-ci et/ou d'une accumulation de plusieurs messages filtrés et/ou de leurs parties.

7. Procédé suivant l'une des revendications précédentes, **caractérisé en ce que** l'on compare la au moins une première valeur (I1) de référence d'intégrité d'un créneau temporel pouvant être donné à l'avance à la au moins deuxième valeur (I2) de référence d'intégrité mise en corrélation du même créneau temporel.

8. Procédé suivant l'une des revendications précédentes, **caractérisé en ce que** l'on effectue la communication entre les partenaires (IOC, IOD) de communication et la communication entre les interfaces (S1, S2) respectives et le point (IA) de contrôle dans des canaux indépendants les uns des autres.

9. Agencement de communication pour la mise à disposition d'une communication sécurisée entre au moins deux partenaires (IOC, IOD) de communication au sein d'un réseau de communication apte au temps réel, notamment dans l'environnement d'une fabrication et/ou d'une automatisation industrielle, comportant au moins deux interfaces (S1, S2) associées respectivement à l'un des partenaires (IOC, IOD) de communication ayant chacune au moins une unité (F1, F2) de filtrage d'au moins un message (m, n) envoyé ou reçu à l'aide d'au moins un critère de filtrage donné à l'avance, comprenant chacune au moins une unité de formation d'une valeur (I1, I2) de référence d'intégrité sur un message (m, n) filtré et de transmission de la valeur de référence d'intégrité à au moins une installation (IA) de contrôle d'intégrité des valeurs de référence d'intégralité,
comprenant la au moins une installation (IA) de contrôle d'intégrité, qui est conçue pour la mise en corrélation de la première valeur (I1) de référence d'intégrité à la au moins deuxième valeur (I2) de référence d'intégrité et leur comparaison et qui est conçue pour émettre un message d'avertissement et/ou d'alerte ou pour acheminer le message d'avertissement et/ou d'alerte à un point initiant des contre-mesures adéquates, si les valeurs de référence d'intégrité mises en corrélation s'écartent l'une de l'autre.

10. Agencement suivant la revendication précédente, dans lequel le au moins un critère de filtrage peut être synchronisé par l'installation suivant l'une des revendications d'installation précédentes.

11. Agencement de communication suivant l'une des revendications d'agencement précédentes, **caractérisé en ce que** l'interface, qui est associée au partenaire (par exemple IOD) de communication recevant le message et/ou celle qui est associée au partenaire de communication envoyant le message a en outre une unité de réception d'un résultat de comparaison de valeur d'intégrité par l'installation suivant l'une des revendications d'installation précédentes.

12. Agencement de communication suivant la revendication précédente, **caractérisé en ce que** l'interface a en outre une unité d'émission pour émettre un message d'avertissement et/ou d'alerte vers un point initiant des contre-mesures adéquates en fonction du résultat de la comparaison des valeurs d'intégrité.

13. Agencement de communication suivant l'une des revendications d'agencement précédentes, **caractérisé en ce que** les interfaces (S1, S2) sont constituées de manière passive.

14. Agencement de communication suivant l'une des revendications d'agencement précédentes, **caractérisé en ce que** la communication entre les partenaires (IOC, IOD) de communication et la communication entre l'interface (S1, S2) respective et l'installation (IA) de contrôle d'intégrité suivant l'une des revendications d'installation précédentes peut s'effectuer dans des canaux indépendants les uns des autres.
